# EUROPÄISCHE PATENTSCHRIFT

(11) **EP 2 722 151 B1**
(45) Veröffentlichungstag und Bekanntmachung des Hinweises auf die Patenterteilung: **15.06.2016**
(21) Anmeldenummer: 13189407.3
(22) Anmeldetag: 18.10.2013
(51) Int. Cl.: B29C 49/46, B29C 37/00, B29C 49/12, B29C 49/06

(54) **Verfahren und Blasformmaschine mit Reinraum und Trocknungseinrichtung für Luftzuführung**
Method and blow moulding machine with clean room and drying device for the air supply
Procédé et machine de formage par soufflage avec salle blanche et dispositif de séchage pour l'arrivée d'air

(30) Priorität: 22.10.2012 DE 102012110072
(43) Veröffentlichungstag der Anmeldung: 23.04.2014
(73) Patentinhaber: Krones AG, 93073 Neutraubling (DE)
(72) Erfinder: Braun, Franz, 93073 Neutraubling (DE); Söllner, Jürgen, 93073 Neutraubling (DE); Müller, Holger, 93073 Neutraubling (DE)
(74) Vertreter: Bittner, Bernhard

(56) Entgegenhaltungen:
- EP-A1- 2 578 504
- DE-U1-202011 109 959
- FR-A1- 2 887 525

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt.

Bei der Abfüllung gewisser Getränke ist eine sterile Abfüllung derselben erforderlich. In jüngerer Zeit sind jedoch auch Blasformmaschinen bekannt geworden, welche auch einen Blasformvorgang unter sterilen Bedingungen ermöglichen. Diese Maschinen weisen dabei üblicherweise einen Reinraum auf, innerhalb dessen die Umformung der Kunststoffvorformlinge stattfindet.

Um eine Reinraumatmosphäre in einem derartigen Reinraum bzw. Isolator zu schaffen, wird üblicherweise Umgebungsluft filtriert, beispielsweise über Tiefenfilter. Dies kann dabei zentral über eine Filtrationseinheit für einen gesamten Reinraum geschehen oder auch dezentral über einzelne Filtereinheiten in den jeweiligen Bereichen des Isolators bzw. Reinraums. Bei weiteren Verfahren ist es zusätzlich erforderlich, dass die einzelnen Umformungsstationen bzw. zumindest deren Blasformen innerhalb der Blasmodule auf Temperaturen von etwa 10° gekühlt werden. In solchen Fällen kann es dazu kommen, dass feuchte Luft an diesen Formträgern kondensiert. Hieraus kann sich ein mikrobiologisch hohes Risiko ergeben.

Die EP 2 388 129 beschreibt eine Vorrichtung und ein Verfahren gemäß dem Oberbegriff der Ansprüchen 1 und 8.

Der vorliegenden Erfindung liegt daher die Aufgabe zugrunde, derartige Blasformmaschinen betriebssicherer zu gestalten. Insbesondere sollen die Risiken vermindert werden, die sich durch eine Kondensation der Luft innerhalb des Sterilraums ergeben.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, an der eine Vielzahl von Umformungsstationen angeordnet ist, und welche diese Umformungsstationen entlang eines vorgegebenen Transportpfads bewegt. Dabei weisen diese Umformungsstationen jeweils Blasformteile auf, welche bezüglich einander zum Öffnen und Schließen von Blasformen bewegbar sind. Weiterhin weist die Vorrichtung einen Reinraum auf, der den Transportpfad, entlang dessen die Umformungsstationen transportiert werden, umgibt und der mittels wenigstens einer Wandung gegenüber einer (unsterilen) Umgebung abgegrenzt ist. Weiterhin weist die Vorrichtung eine Kühleinrichtung zur Kühlung wenigstens eines Elementes der jeweiligen Umformungsstationen auf, und die Vorrichtung weist weiterhin eine Zuführungseinrichtung auf, welche dem Reinraum ein gasförmiges Medium zuführt.

Erfindungsgemäß weist die Vorrichtung eine Trocknungseinrichtung auf, um das dem Reinraum über die Zuführungseinrichtung zugeführte gasförmige Medium zu trocknen.

Es wird daher vorgeschlagen, dass das Medium, welches die Reinraumatmosphäre bildet, zunächst von einer Trocknungseinrichtung getrocknet wird. Auf diese Weise kann ein Kondensieren an den relativ kühlen Blasformelementen verhindert werden. Insbesondere dient die Kühleinrichtung zur Kühlung der Blasformen und insbesondere derjenigen Bereiche, welche während des Umformungsvorgangs mit den zu expandierenden Kunststoffvorformlingen in Berührung kommen.

Bei dem Reinraum zugeführten gasförmigen Medium handelt es sich dabei bevorzugt nicht um dasjenige Medium, welches zur Expansion der Kunststoffvorformlinge diesen zugeführt wird, sondern dieses Medium wird dem Reinraum selbst zugeführt.

Bei einer weiteren vorteilhaften Ausführungsform handelt es sich bei der Transporteinrichtung um eine drehbare Transporteinrichtung und insbesondere einen drehbaren Träger, an dem die einzelnen Umformungsstationen - insbesondere äquidistant - angeordnet sind.

Vorteilhaft weist wenigstens eine Umformungsstation und besonders bevorzugt weisen sämtliche Umformungsstationen auch jeweils Reckstangen auf, welche die Kunststoffvorformlinge in ihrer Längsrichtung dehnen. Weiterhin sind bevorzugt jeweils an den Umformungsstationen Blasdüsen vorgesehen, welche die Kunststoffvorformlinge mit einem gasförmigen Medium und insbesondere mit Druckluft beaufschlagen, um diese zu expandieren.

Bei einer weiteren vorteilhaften Ausführungsform ist auch eine Filtereinrichtung vorgesehen, welche das dem Reinraum über die Zuführungseinrichtung zugeführte gasförmige Medium filtert.

Vorteilhaft ist die Zuführung des gasförmigen Mediums in den Reinraum derart gestaltet, dass dieses dem Reinraum aus einer (unsterilen) Umgebung zugeführt wird.

Bei einer weiteren vorteilhaften Ausführungsform weist die Kühleinrichtung wenigstens eine Leitung zum Leiten eines fließfähigen und insbesondere flüssigen Kühlmediums auf, welches den Blasformelementen zu deren Kühlung zugeführt wird. Es damit hier vorgeschlagen, dass die Kühlung der Blasformelemente und insbesondere der Blasformen durch ein Kühlmittel erfolgt. Zu diesem Zweck können die Blasformelemente beispielsweise Kanäle aufweise, durch welche hindurch das fließfähige und insbesondere flüssige Kühlmedium geleitet werden kann. So können beispielsweise in den Blasformen oder in deren Trägerschalen derartige Kanäle vorgesehen sein.

Bei einer weiteren vorteilhaften Ausführungsform ist diese besagte Leitung wenigstens abschnittsweise auch ein Bestandteil der Trocknungseinrichtung.

Aus anderen Bereichen sind Systeme zur Trocknung von Luft bekannt. Dabei sollte jedoch sichergestellt sein, dass zu jedem Zeitpunkt des Prozesses die Möglichkeit einer Kondensation nicht gegeben ist. So wäre es zwar denkbar, unabhängig voneinander arbeitende Systeme einzusetzen, beispielsweise einen Kühlkreislauf zur Trocknung der Luft und einen weiteren Kühlkreislauf zur Kühlung der Blasformen bzw. Formträger. Dies würde jedoch einen erhöhten Regelaufwand bedingen sowie auch die kostenintensive Bereitstellung mehrerer Kühlaggregate. Auch würde damit die Komplexität steigen und damit auch die Fehleranfälligkeit.

Es wird bei dieser Ausführungsform daher vorgeschlagen, dass die Kühleinrichtung sowohl die Kühlung der Blasformen bewirkt als auch die Trocknung der dem Reinraum zugeführten Luft.

Mit anderen Worten wird das besagte Kühlmedium insbesondere auch zur Trocknung der dem Reinraum zugeführten Luft verwendet.

Vorteilhaft sind die Trocknungseinrichtungen und die Kühleinrichtungen zur Kühlung der Umformungsstationselemente in einen gemeinsamen Kühlkreislauf eingebunden. Vorteilhaft weist dieser Kühlmittelkreislauf eine Pumpeneinrichtung auf.

Bei einer weiteren vorteilhaften Ausführungsform verläuft die oben besagte Leitung derart, dass das Kühlmedium ausgehend von einer Kühleinrichtung zum Kühlen des Kühlmediums zuerst zu der Trocknungseinrichtung und anschließend zu den Elementen der Umformungsstation gelangt. Vorteilhaft wird bei dieser Vorrichtung ein Kühlmittel, wie beispielsweise Glykol, in Reihe zunächst über den Lufttrockner geführt und nachfolgend über die Formträgerkühlung bzw. die Blasformen gefahren. Vorteilhaft wird dabei ein Volumenstrom des Kühlmittels konstant gehalten. Bevorzugt regelt ein Kompressor zur Bereitstellung der Kühlleistung auf einen Temperatur-Sollwert am Eingang der Kühlstufe für die Formträger bzw. Blasformen. In diesem Bereich sollte die jeweilige Temperatur für einen optimalen Prozess des Behälterformens im Wesentlichen konstant sein.

Vorteilhaft sorgt eine Pumpeneinrichtung des Kühlmittelkreislaufes für einen konstanten Volumenstrom.

Bei einer weiteren vorteilhaften Ausführungsform weist die Vorrichtung eine Messeinrichtung zum Bestimmen wenigstens einer für das fließfähige Medium charakteristischen physikalischen Eigenschaft auf.

Vorteilhaft erfasst dabei die Messeinrichtung einen Anteil einer Kühlsubstanz in dem fließfähigen Medium.

Es wird hier vorgeschlagen, dass in einem Kühlmittelkreislauf eine Messeinrichtung vorgesehen ist, welche die Konzentration der Kühlsubstanz, bei der es sich insbesondere um Glykol handelt, bestimmt. Bevorzugt misst diese Messeinrichtung ein Verhältnis zwischen Glykol und einem Lösungsmittel, wie insbesondere Wasser.

Bei einer Konzentration von insbesondere weniger als 30 Vol.-% Glykol in Wasser ist die mikrobiologische Eigenstabilität nicht mehr gegeben und damit die Sterilität des Systems nicht mehr gewährleistet. Hierbei ist zu beachten, dass sich die Formträger mit ihren Kühlkreisläufen innerhalb des Reinraums befinden. Es wird darauf hingewiesen, dass die hier beschriebene Messung dieses Glykolanteils auch unabhängig von der oben dargelegten Trocknungseinrichtung verwendet werden kann.

Die Anmelderin behält sich damit vor, auch für eine Blasformmaschine Schutz zu beanspruchen, welche sich eben durch diese Sensoreinrichtung in dem Kühlkreislauf auszeichnet und welche gegebenenfalls auch ohne oben erwähnte Trocknungseinrichtung arbeiten kann.

Bei einer weiteren vorteilhaften Ausführungsform weist die Vorrichtung eine zweite Messeinrichtung auf, welche eine Temperatur des fließfähigen Mediums, insbesondere des Kühlmediums, erfasst. Vorteilhaft ist weiterhin eine Regelungseinrichtung vorgesehen, welche ein Kühlaggregat auf Basis dieser gemessenen Temperatur steuert, um so, wie oben erwähnt, nach Möglichkeit die Eingangstemperatur des Kühlmediums konstant zu halten.

Die vorliegende Erfindung ist weiterhin auf ein Verfahren zum Umformen von Kunststoffbehältnissen gerichtet, wobei die Kunststoffbehältnisse in einer Vielzahl von an einer Transporteinrichtung angeordneten Umformungsstationen transportiert werden und während dieses Transports durch Beaufschlagung mit einem gasförmigen Medium zu den Kunststoffbehältnissen umgeformt werden und wobei die Umformungsstationen innerhalb eines Reinraums transportiert werden und wenigstens ein Element der einzelnen Umformungsstationen mittels einer Kühleinrichtung gekühlt wird.

Erfindungsgemäß wird dem Reinraum von einer Trocknungseinrichtung getrocknete Luft zugeführt.

Auch bei dieser zugeführten Luft handelt es sich nicht um die den Kunststoffvorformlingen zur Expansion zugeführte Luft, sondern um Luft, die der Atmosphäre des Reinraums zugeführt wird. Vorteilhaft wird zusätzlich den einzelnen Kunststoffvorformlingen, wie oben erwähnt, auch Blasluft zu deren Expansion zugeführt. Auch bei dieser Luft kann es sich um Sterilluft handeln.

Vorteilhaft wird sowohl zum Kühlen der Elemente der Umformungsstationen als auch zum Trocknen des dem Reinraum zugeführten gasförmigen Mediums ein fließfähiges Medium verwendet, wobei dieses fließfähige Medium die Trocknungseinrichtung und wenigstens einen Bereich der Umformungsstationen hintereinander durchströmt. Es wird damit auch verfahrensseitig vorgeschlagen, dass das gleiche Medium, welches zum Kühlen der Blasformen verwendet wird, auch zum Trocknen der dem Reinraum zugeführten Luft verwendet wird.

Bei einem weiteren bevorzugten Verfahren wird wenigstens eine physikalische und/oder chemische Eigenschaft des fließfähigen Mediums bestimmt. Vorteilhaft handelt es sich hierbei um eine Konzentration einer Komponente dieses Kühlmediums, insbesondere eines Glykolanteils.

Bevorzugt wird das Kühlmedium mit einem konstanten Volumenstrom geführt. Bei einem weiteren vorteilhaften Verfahren werden wenigstens zwei physikalische Eigenschaften des fließfähigen Mediums bestimmt und insbesondere eine Temperatur des fließfähigen Mediums sowie die oben erwähnte Konzentration der Komponente dieses Kühlmediums. Vorteilhaft wird eine Kühleinrichtung auf Basis der ermittelten Temperatur gesteuert. Bei einem weiteren vorteilhaften Verfahren wird das fließfähige Medium zunächst zum Trocknen der Luft verwendet und anschließend zum Kühlen der einzelnen Blasformen.

Das In-Reihe-Schalten der beiden Wärmeüberträger und das bevorzugte Regeln auf nur eine Temperaturmesseinrichtung gewährleistet zu jedem Zeitpunkt eine Temperaturdifferenz zwischen der Trocknungseinrichtung und der Kühlung der Blasformteile. Die Trocknungseinrichtung wird damit in jedem Fall kälter durchfahren, als die Formträger bzw. Blasformen (da Wärme in der Trocknungseinrichtung auf das Glykol übergeht). Damit fällt durch die geringere Temperatur mehr Wasser aus, da die Sättigungsgrenze der Luft mit Wasser sinkt. Auf diese Weise ist die Temperatur der Luft nach der Trocknungseinrichtung kleiner als die Temperatur der Formträger bzw. Blasformkühlung.

Kommt die so getrocknete Luft in den Isolator an die höher temperierten Formträger, besteht keine Gefahr einer Kondensation. Auf diese Weise bleibt das System trocken und damit mikrobiologisch stabil. Durch die oben erwähnte In-Reihe-Schaltung ist dies auch unabhängig von der tatsächlichen Temperatur des Kühlmediums.

Das hier beschriebene System kann mit einem bereits vorhandenen Kühlaggregat zur Formträgerkühlung arbeiten, welches insbesondere als Standard bereits verfügbar ist. Es ist somit kein Mehraufwand notwendig, sondern lediglich die Anbindung an die Trocknungseinrichtung ist erforderlich. Auf diese Weise ist auch eine Modularität möglich.

Durch die oben beschriebene Konzentrationsmessung des Glykols kann ebenfalls die Sterilität des Prozesses gewährleistet werden. Bei Unterschreitung einer Mindestkonzentration kann bevorzugt eine Warnung generiert werden, um einen Kühlmittelaustausch zu veranlassen.

Weitere Vorteile und Ausführungsformen ergeben sich aus den beigefügten Zeichnungen.

Darin zeigen:
- Fig. 1: Eine schematische Darstellung zur Veranschaulichung einer erfindungsgemäßen Vorrichtung; und
- Fig. 2: eine blockdiagrammartige Darstellung zur Veranschaulichung des erfindungsgemäßen Verfahrens.

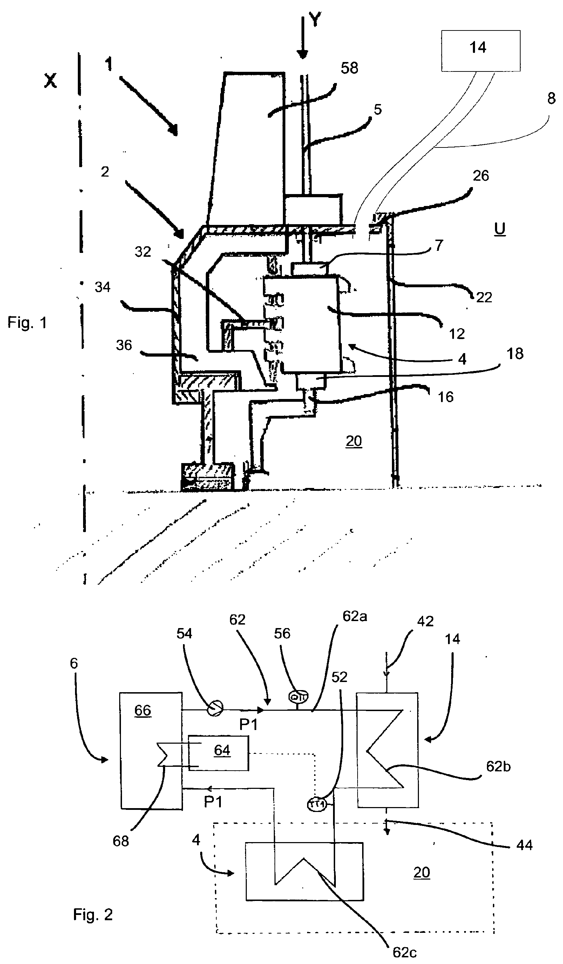

Fig. 1 zeigt eine schematische Darstellung einer erfindungsgemäßen Vorrichtung 1 zum Umformen von Kunststoffvorformlingen zu Kunststoffbehältnissen. Dabei kennzeichnet das Bezugszeichen 2 grob schematisch eine Transporteinrichtung, wie etwa ein Blasrad, an dem die einzelnen Umformungsstationen 4 angeordnet sind. Das Bezugszeichen 12 kennzeichnet ein Blasformteil, wie beispielsweise einen Blasformträger, der hier in der Figurenebene geschwenkt werden kann, um die Blasformen zu öffnen und zu schließen. Mittels einer Reckstange 5, die an einem Träger 58 gehalten wird, kann der Kunststoffvorformling (im Inneren der Umformungsstation 4) in eine Längsrichtung gedehnt werden. Daneben ist auch eine Blasdüse 7 vorgesehen, um den Kunststoffvorformling mit einem gasförmigen Medium und insbesondere mit Druckluft zu beaufschlagen.

Das Bezugszeichen 20 kennzeichnet einen Reinraum innerhalb dessen die Umformungsstation (und auch eine oder mehrere weitere, nicht gezeigte Umformungsstationen) geführt wird. Das Bezugszeichen 16 kennzeichnet eine Antriebseinrichtung, mittels der hier ein Bodenteil 18, welches ebenfalls ein Bestandteil der Blasform ausbildet, bewegt werden kann. Das Bezugszeichen 22 kennzeichnet eine Wandung, welche den Reinraum 20 gegenüber einer Umgebung U abgrenzt. Innerhalb des Reinraums befindet sich eine Reinraumatmosphäre, insbesondere aus Sterilluft.

Das Bezugszeichen 34 kennzeichnet eine weitere Reinraum begrenzende Wandung, wobei diese Wandung hier durch den Träger bzw. die Transporteinrichtung selbst ausgebildet ist. An einer Halterung 36 ist die Umformungsstation 12 angeordnet und mittels einer Bewegungseinrichtung 32 können die Blasformteile geschwenkt werden.

Das Bezugszeichen 8 kennzeichnet eine Zuführeinrichtung, um den Reinraum 20 ein gasförmiges Medium zuzuführen. Hierzu ist eine Trocknungseinrichtung 14 vorgesehen, welche zum Trocknen dieses gasförmigen Mediums dient. Das Bezugszeichen 26 kennzeichnet grob schematisch eine Dichtungseinrichtung, um eine bewegliche Wandung 34, welche den Reinraum abgrenzt, gegenüber der stationären Wandung 22 abzugrenzen. Bevorzugt wird als Dichtungseinrichtung hier ein sogenanntes Wasserschloss verwendet, welches einen umlaufenden Kanal aufweist sowie ein Schwert, welches in diesen Kanal eintaucht. In diesem Kanal befindet sich beispielsweise eine Flüssigkeit wie Wasser.

Fig. 2 zeigt eine Skizze zur Veranschaulichung des erfindungsgemäßen Verfahrens. Auch hier ist wieder der Reinraum 20 dargestellt, innerhalb dessen die einzelnen Umformungsstationen 4 transportiert werden. Das Bezugszeichen 6 kennzeichnet in seiner Gesamtheit eine Kühleinrichtung, welche insbesondere zum Kühlen von Elementen der Umformungsstation 4 dient. Diese Kühleinrichtung 6 weist dabei ein Kühlaggregat 66 auf, sowie einen Kompressor 64, um insgesamt ein in einer Leitung 62 befindliches Kühlmedium zu kühlen.

Diese Leitung 62 weist dabei mehrere Leitungsabschnitte 62a, 62b und 62c auf. Wie erkennbar ist, strömt das Kühlmedium in der Leitung 62 (Pfeil P1) zunächst durch die Trocknungseinrichtung 14, in der es eine Trocknung der dem Reinraum 20 zugeführten Luft bewirkt. Dabei wird über eine Leitung 42 Luft aus der Umgebung, die bevorzugt bereits gefiltert wurde, der Trocknungseinrichtung 14 zugeführt und die getrocknete Luft über eine weitere Ableitung 44 dem Reinraum 20 zugeführt. Das Bezugszeichen 62a kennzeichnet damit einen ersten Leitungsabschnitt der Leitung 62, der stromaufwärts der Trocknungseinrichtung 14 liegt. Das Bezugszeichen 62b kennzeichnet denjenigen Abschnitt, der innerhalb der Trocknungseinrichtung für die Trocknung der Luft sorgt. Anschließend gelangt das Kühlmedium in einen dritten Abschnitt 62c, in dem es zur Kühlung der einzelnen Umformungsstationen 4 verwendet wird. Anschließend wird das Kühlmedium wieder zu dem Kühlaggregat 66 rückgeführt. Erfindungsgemäß ist demnach bevorzugt ein gemeinsamer Kühlkreislauf für die Trocknung der Luft, die dem Reinraum 20 zugeführt werden soll, sowie für die Kühlung der Umformungsstationen 4 bzw. den darin angeordneten Blasformen angeordnet.

Das Bezugszeichen 54 kennzeichnet eine Pumpeneinrichtung, welche das Kühlmedium durch den Kühlkreislauf pumpt. Das Bezugszeichen 52 kennzeichnet eine Temperaturmesseinrichtung, welche eine Temperatur des Kühlmediums nach der Trocknungseinrichtung 14 misst bzw. eine notwendige Temperatur des Kühlmediums für die Kühlung der Blasformen sicherstellt. In Abhängigkeit von dieser Temperatur wird der Kompressor und damit die Kühlwirkung, gesteuert. Das Kühlmedium wird dabei nicht nur einer Umformungsstation 4 zugeführt, sondern bevorzugt allen Umformungsstationen. Dies kann wiederum über eine Verteilungsleitung erfolgen, welche das Kühlmedium (nicht gezeigt) an die einzelnen Umformungsstationen verteilt.

Das Bezugszeichen 56 kennzeichnet eine weitere Messeinrichtung, welche hier eine Konzentration eines Kühlmittels (beispielsweise Glykol) bestimmt. Daneben kann eine Steuerungseinrichtung 70 vorgesehen sein (nicht dargestellt), welche den gesamten Kühlprozess in Abhängigkeit etwa von den Messwerten der Messeinrichtungen 52 und 56 steuert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Transporteinrichtung (Blasrad)
- 4: Umformungseinrichtungen
- 5: Reckstange
- 6: Kühleinrichtung
- 7: Blasdüse
- 8: Zuführeinrichtung
- 12: Blasformteil
- 14: Trocknungseinrichtung
- 16: Antriebseinrichtung
- 18: Bodenteil
- 20: Reinraum
- 22: stationäre Wandung
- 26: Dichtungseinrichtung
- 32: Bewegungseinrichtung
- 34: bewegliche Wandung
- 36: Halterung
- 42: Leitung
- 44: weitere Ableitung
- 52: Temperaturmesseinrichtung
- 54: Pumpeneinrichtung
- 56: weitere Messeinrichtung
- 58: Träger
- 62: Leitung
- 62a,b,c: Leitungsabschnitte
- 64: Kompressor
- 66: Kühlaggregat
- 68: Wärmeüberträger (für das Kühlmedium im Kälteaggregat)
- 70: Steuerungseinrichtung
- U: Umgebung

## Patentansprüche

1. Vorrichtung (1) zum Umformen von Kunststoffvorformlingen zu Kunststoffbehältnissen mit einer Transporteinrichtung (2), an der eine Vielzahl von Umformungsstationen (4) angeordnet ist und welche diese Umformungsstationen (4) entlang eines vorgegebenen Transportpfads (P) bewegt, wobei diese Umformungsstationen (4) jeweils bezüglich einander bewegliche Blasformteile (12) aufweisen, welche bezüglich einander zum Öffnen und Schließen von Blasformen bewegbar sind, und wobei die Vorrichtung (1) einen Reinraum (20) aufweist, der den Transportpfad (P), entlang dessen die Umformungsstationen (4) transportiert werden, umgibt und der mittels wenigstens einer Wandung (22) gegenüber einer Umgebung (U) abgegrenzt ist, und wobei die Vorrichtung eine Kühleinrichtung (6) zur Kühlung wenigstens eines Elements der jeweiligen Umformungsstationen (4) aufweist, und wobei die Vorrichtung (1) eine Zuführungseinrichtung (8) aufweist, welche dem Reinraum (20) ein gasförmiges Medium zuführt
**dadurch gekennzeichnet, dass**
die Vorrichtung (1) eine Trocknungseinrichtung (14) aufweist, um das dem Reinraum über die Zuführungseinrichtung (8) zugeführte gasförmige Medium zu trocknen.

2. Vorrichtung (1) nach Anspruch 1,
**dadurch gekennzeichnet, dass**
die Kühleinrichtung (6) wenigstens eine Leitung (62) zum Leiten eines fliessfähigen Kühlmediums aufweist, welches den Blasformelementen (12) zu deren Kühlung zugeführt wird.

3. Vorrichtung (1) nach Anspruch 2,
**dadurch gekennzeichnet, dass**
die Leitung (62) wenigstens abschnittsweise auch einen Bestandteil der Trocknungseinrichtung (14) bildet.

4. Vorrichtung (1) nach Anspruch 3
**dadurch gekennzeichnet, dass**
die Leitung (62) derart verläuft, dass das Kühlmedium ausgehend von einer Kühleinrichtung (66) zum Kühlen des Kühlmediums zuerst zu der Trocknungseinrichtung (14) und anschließend zu den Elementen der Umformungsstationen (4) gelangt.

5. Vorrichtung (1) nach wenigstens einem der vorangegangenen Ansprüche 2 - 4,
**dadurch gekennzeichnet, dass**
die Vorrichtung (1) eine Messeinrichtung (56) zum Bestimmen wenigstens einer für das fließfähige Medium charakteristischen physikalischen Eigenschaft aufweist.

6. Vorrichtung (1) nach Anspruch 5.
**dadurch gekennzeichnet, dass**
die Messeinrichtung (56) einen Anteil einer Kühlsubstanz in dem fliessfähigen Medium erfasst.

7. Vorrichtung (1) nach wenigstens einem der vorangegangenen Ansprüche 2 - 6
**dadurch gekennzeichnet, dass**
die Vorrichtung (1) eine zweite Messeinrichtung (52) zum Erfassen einer Temperatur des fließfähigen Mediums aufweist.

8. Verfahren zum Umformen von Kunststoffvorformlingen zu Kunststoffbehältnissen,
wobei die Kunststoffbehältnisse in einer Vielzahl von an einer Transporteinrichtung (2) angeordneten Umformungsstationen (4) transportiert werden und während dieses Transports durch Beaufschlagung mit einem gasförmigen Medium zu den Kunststoffbehältnissen umgeformt werden und wobei die Umformungsstationen (4) innerhalb eines Reinraums (20) transportiert werden, und wobei wenigstens ein Element der einzelnen Umformungsstationen (4) mittels einer Kühleinrichtung (6) gekühlt wird,
**dadurch gekennzeichnet, dass**
dem Reinraum (20) von einer Trocknungseinrichtung (14) getrocknete Luft zugeführt wird.

9. Verfahren nach Anspruch 8,
**dadurch gekennzeichnet, dass**
sowohl zum Kühlen der Elemente der Umformungsstationen (4) als auch zum Trocknen der dem Reinraum (20) zugeführten Luft ein fließfähiges Medium verwendet wird, wobei dieses fließfähige Medium die Trocknungseinrichtung und wenigstens einen Bereich der Umformungsstationen (4) hintereinander durchströmt.

10. Verfahren nach Anspruch 8,
**dadurch gekennzeichnet, dass**
wenigstens eine Konzentration einer Komponente eines zur Kühlung dienenden fließfähigen Mediums bestimmt wird.

## Claims

1. An apparatus (1) for shaping plastics material preforms into plastics material containers, comprising a transport unit (2), on which a plurality of shaping stations (4) are provided and which moves these shaping stations (4) along a predefined transport path (P), wherein these shaping stations (4) respectively have blow mould parts (12) that are movable relative to each other, which blow mould parts are movable relative to each other for opening and closing blow moulds, and wherein the apparatus (1) comprises a clean room (20) that surrounds a transport path (P), along which said shaping stations (4) are transported, and which is separated from an environment (U) by means of at least one wall (22), and wherein the apparatus comprises a cooling system (6) for cooling at least one element of the respective shaping stations (4), and wherein the apparatus (1) comprises a supply unit (8) that supplies a gaseous medium to the clean room (20),
**characterised in that** the apparatus (1) comprises a drying unit (14) in order to dry the gaseous medium supplied to the clean room via the supply unit (8).

2. The apparatus (1) as claimed in claim 1,
**characterised in that** the cooling unit (6) comprises at least one conduit (62) for conducting a flowable cooling medium, which is supplied to the blow mould elements (12) for the cooling thereof.

3. The apparatus (1) as claimed in claim 2,
**characterised in that** the conduit (62) forms, at least in sections, also a component of the drying unit (14).

4. The apparatus (1) as claimed in claim 3,
**characterised in that** the conduit (62) extends in such a way that proceeding from a cooling unit (66) for cooling the cooling medium, the cooling medium arrives initially at the drying unit (14) and subsequently at the elements of the shaping stations (4).

5. The apparatus (1) as claimed in at least one of the preceding claims 2 - 4,
**characterised in that** the apparatus (1) comprises a measurement unit (56) for determining at least one of the physical properties that are characteristic of the flowable medium.

6. The apparatus (1) as claimed in claim 5,
**characterised in that** the measurement unit (56) detects a proportion of a cooling substance in the flowable medium.

7. The apparatus (1) as claimed in at least one of the preceding claims 2 - 6,
**characterised in that** the apparatus (1) comprises a second measurement unit (52) for detecting a temperature of the flowable medium.

8. A method for shaping plastics material preforms into plastics material containers, wherein the plastics material containers are transported in a plurality of shaping stations (4) provided on a transport unit (2) and are shaped during this transport operation by applying a gaseous medium to the plastics material containers, and wherein the shaping stations (4) are transported within a clean room (20), and wherein at least one element of the individual shaping stations (4) is cooled by means of a cooling system (6),
**characterised in that** dried air is supplied to the clean room (20) from a drying unit (14).

9. The method as claimed in claim 8,
**characterised in that** both for cooling the elements of the shaping stations (4) and for drying the air supplied to the clean room (20), a flowable medium is used, which flowable medium successively flows through the drying unit and through at least an area of the shaping stations (4).

10. The method as claimed in claim 8,
**characterised in that** at least a concentration of a component of a flowable medium serving for cooling is determined.

## Revendications

1. Dispositif (1) pour la transformation de préformes en matière plastique en récipients en matière plastique avec un dispositif de transport (2), sur lequel est disposée une pluralité de stations de transformation (4) et qui déplace ces stations de transformation (4) le long d'un chemin de transport (P) prédéfini, ces stations de transformation (4) comprenant des parties de transformation par soufflage (12) mobiles les unes par rapport aux autres pouvant être déplacées les unes par rapport aux autres pour l'ouverture et la fermeture des formes de soufflage; et le dispositif (1) comprenant une salle blanche (20) qui entoure le chemin de transport (P) le long duquel les stations de transformation (4) sont transportées et le délimite par rapport à l'environnement (U) au moyen d'au moins une paroi (22); et le dispositif comprenant un dispositif de refroidissement (6) pour le refroidissement d'au moins un élément des stations de transformation (4) respectives; et le dispositif (1) comprenant un dispositif d'alimentation (8) qui introduit, dans la salle blanche (20), un fluide gazeux,
**caractérisé en ce que**
le dispositif (1) comprend un dispositif de séchage (14) afin de sécher le fluide gazeux introduit dans la salle blanche par l'intermédiaire du dispositif d'alimentation (8).

2. Dispositif (1) selon la revendication 1,
**caractérisé en ce que**
le dispositif de refroidissement (6) comprend au moins une conduite (62) permettant de conduire un milieu de refroidissement fluide, qui est introduit dans les éléments de forme de soufflage (12) pour son refroidissement.

3. Dispositif (1) selon la revendication 2,
**caractérisé en ce que**
la conduite (62) constitue également au moins en sections une partie du dispositif de séchage (14).

4. Dispositif (1) selon la revendication 3,
**caractérisé en ce que**
la conduite (62) s'étend de façon à ce que le fluide de refroidissement arrive, à partir d'un dispositif de refroidissement (66), pour le refroidissement du fluide de refroidissement, d'abord dans le dispositif de séchage (14), puis vers les éléments des stations de transformation (4).

5. Dispositif (1) selon au moins une des revendications précédentes 2 à 4,
**caractérisé en ce que**
le dispositif (1) comprend un dispositif de mesure (56) pour la détermination d'au moins une propriété physique caractéristique du milieu fluide.

6. Dispositif (1) selon la revendication 5,
**caractérisé en ce que**
le dispositif de mesure (56) détermine une partie de substance de refroidissement dans le milieu fluide.

7. Dispositif (1) selon au moins l'une des revendications 2 à 6,
**caractérisé en ce que**
le dispositif (1) comprend un deuxième dispositif de mesure (52) pour la détection d'une température du milieu fluide.

8. Procédé de transformation de préformes en matière plastique en récipients en matière plastique, les récipients en matière plastique étant transportés dans une pluralité de stations de transformation (4) disposées sur un dispositif de transport (2) et formés, pendant ce transport, grâce à l'introduction d'un milieu gazeux dans les récipients en matière plastique et les stations de transformation (4) étant transportées à l'intérieur d'une salle blanche (20) et au moins un élément des différentes stations de transformation (4) étant refroidi au moyen d'un dispositif de refroidissement (6),
**caractérisé en ce que**
de l'air asséché est introduit dans la salle blanche (20) par un dispositif de séchage (14).

9. Procédé selon la revendication 8,
**caractérisé en ce que**,
pour le refroidissement des éléments des stations de transformation (4) et pour le séchage de l'air introduit dans la salle blanche (20), un milieu fluide est utilisé, ce milieu fluide traversant successivement le dispositif de séchage et au moins une partie des stations de transformation (4).

10. Procédé selon la revendication 8,
**caractérisé en ce qu'**
au moins une concentration d'un composant d'un milieu fluide permettant le refroidissement est déterminée.
